# EUROPÄISCHE PATENTSCHRIFT

(11) **EP 2 640 994 B1**
(45) Veröffentlichungstag und Bekanntmachung des Hinweises auf die Patenterteilung: **25.02.2015**
(21) Anmeldenummer: 11822795.8
(22) Anmeldetag: 07.11.2011
(51) Int. Cl.: F16D 13/75

(54) **REIBUNGSKUPPLUNG MIT NACHSTELLEINRICHTUNG**
FRICTION CLUTCH WITH ADJUSTING DEVICE
EMBRAYAGE À FRICTION AVEC DISPOSITIF DE RATTRAPAGE

(30) Priorität: 19.11.2010 DE 102010052021; 24.08.2011 DE 102011081476; 24.08.2011 DE 102011081475
(43) Veröffentlichungstag der Anmeldung: 25.09.2013
(73) Patentinhaber: Schaeffler Technologies GmbH & Co. KG, 91074 Herzogenaurach (DE)
(72) Erfinder: ZIEFLE, Florian, 72250 Freudenstadt (DE)
(86) Internationale Anmeldenummer: PCT/DE2011/001939
(87) Internationale Veröffentlichungsnummer: WO 2012/065590

(56) Entgegenhaltungen:
- DE-A1-102008 051 100
- US-A- 5 816 379

## Beschreibung

Die Erfindung betrifft eine Reibungskupplung mit einer mit einem Gehäuse drehfest verbundenen Gegendruckplatte und einer mittels Blattfedern gegenüber dieser drehfest und axial verlagerbar aufgenommenen und von einer Tellerfeder unter Einspannung von Reibbelägen auf einen voreingestellten Betriebspunkt vorgespannten Anpressplatte sowie einer Nachstelleinrichtung zur Nachführung eines sich ändernden Betriebspunktes mittels eines mit in Umfangsrichtung und über den Umfang verteilten auf komplementären Gegenrampen der Anpressplatte an der Anpressplatte aufgenommenen und abhängig von einer Änderung des Betriebspunkts von einem Spindeltrieb verdrehten Rampenrings sowie einer eine Änderung des Betriebspunktes erfassende, den Spindeltrieb steuernde Sensiereinrichtung.

Aus der DE 10 2008 051 100 A1 ist eine Reibungskupplung bekannt, bei der ein sich infolge Belagsverschleiß der Reibbeläge ändernder Betriebspunkt selbsttätig nachgestellt wird. Hierbei ist an der Anpressplatte ein Spindeltrieb vorgesehen, der den Rampenring bei vorliegendem Verschleiß in eine Richtung verdreht. Hierzu ist an dem Gehäuse eine Klinke fest angeordnet, die ein Ritzel des Spindeltriebs verdreht, indem bei Überschreiten eines vorgegebenen Verschleißwegs vor dem Öffnen ein Formschluss zwischen Ritzel und Klinke gebildet wird und beim Öffnen der Reibungskupplung der Betriebspunkt durch Verdrehen des Ritzels durch die Klinke korrigiert wird. Hierbei steht lediglich eine diskontinuierliche Kompensation des Reibbelagsverschleißes zur Verfügung.

Aus der nicht vorveröffentlichten deutschen Patentanmeldung Nr. 10 2010 052 021.7 ist weiterhin eine Reibungskupplung mit einer Nachstelleinrichtung bekannt, bei der die aus Klinke und Ritzel gebildete Sensier- und Betätigungseinrichtung durch ein mit dem Gehäuse verbundenes und um die Spindel des Spindelgetriebes gewickeltes Schlingseil wie Schlingband ersetzt ist, das die Spindel des Spindeltriebs abhängig vom Belagsverschleiß verdreht, so dass der sich infolge Belagsverschleißes geänderte Betriebspunkt kontinuierlich und stufenlos korrigiert wird. Ein sich in beide Richtungen, beispielsweise bei Belagsverschleiß in eine Richtung und durch aufquellende Reibbeläge und/oder Topfung der Anpressplatte und/oder Gegendruckplatte in die andere Richtung ändernder Betriebspunkt kann dabei nicht vollständig korrigiert werden.

Aus der US5,816,379 ist weiterhin eine Reibungskupplung mit einer Nachstelleinrichtung nach dem Oberbegriff von Anspruch 1 bekannt.

Aufgabe der Erfindung ist daher die Weiterbildung einer Reibungskupplung mit Nachstelleinrichtung, bei der ein sich ändernder Betriebspunkt in beide Richtungen kontinuierlich und stufenlos korrigiert werden kann.

Die Aufgabe wird durch eine Reibungskupplung mit einer mit einem Gehäuse drehfest verbundenen Gegendruckplatte und einer mittels Blattfedern gegenüber dieser drehfest und axial verlagerbar aufgenommenen und von einer Tellerfeder unter Einspannung von Reibbelägen auf einen voreingestellten Betriebspunkt vorgespannten Anpressplatte sowie einer Nachstelleinrichtung zur Nachführung eines sich ändernden Betriebspunktes mittels eines mit in Umfangsrichtung und über den Umfang verteilten auf komplementären Gegenrampen der Anpressplatte an der Anpressplatte aufgenommenen und abhängig von einer Änderung des Betriebspunkts von einem Spindeltrieb verdrehten Rampenrings sowie einer eine Änderung des Betriebspunktes erfassende, den Spindeltrieb steuernde Sensiereinrichtung gelöst, wobei der Spindeltrieb fest an dem Gehäuse aufgenommen ist und drei konzentrisch zueinander angeordnete, begrenzt gegenüber dem Gehäuse und gegeneinander verdrehbare Wellenabschnitte aufweist, der innere Wellenabschnitt ein den Rampenring antreibendes Spindelgetriebe enthält und gegenüber dem mittleren Wellenabschnitt in eine Drehrichtung fest und in die andere Drehrichtung entgegen der Wirkung erster Energiespeicher begrenzt verdrehbar ist und der mittlere und der äußere, die Sensiereinrichtung zum Rampenring enthaltende Wellenabschnitt jeweils mittels zweier gegeneinander geschalteter schaltbarer Schlingbänder gegenüber dem Gehäuse verdrehgesichert angeordnet sind.

Durch die Aufnahme des Spindeltriebs an dem Gehäuse wird eine Isolierung dieses gegenüber Schwingungen der Anpressplatte erzielt, so dass vibrationsbedingte Fehlnachstellungen zumindest minimiert werden.

Durch die Gegeneinanderschaltung der schaltbaren Schlingbänder oder Schlingseile werden die Wellenabschnitte verdrehgesichert gehalten, so dass ein vorgegebener beziehungsweise nach einer Nachstellung korrigierter Betriebspunkt stabilisiert wird. Hierbei kann die Spindel selbst verdrehgesichert ausgebildet sein, indem diese gegenüber dem zweiten Wellenabschnitt in eine Drehrichtung verdrehgesichert und in die andere Drehrichtung entgegen der Wirkung von Energiespeichern wie Blattfedern verdrehbar angeordnet ist. Bei entsprechender Verdrehsicherung des zweiten Wellenabschnitts kann sich die Spindel des Spindeltriebs selbständig in eine Drehrichtung verdrehen, wobei eine Verdrehung in diese Drehrichtung bei geschlossener Reibungskupplung durch die Verspannung von Rampenring und Anpressplatte durch die Tellerfeder ausgeschlossen ist. Die Verdrehung der Spindel hängt daher von der Verdrehbarkeit des zweiten Wellenabschnitts ab. An diesem kann ein erstes Paar gegeneinander geschalteter Schlingbänder jeweils mittels eines Endes fest und des anderen Endes unter Zwischenschaltung eines Energiespeichers elastisch mit dem Gehäuse angeordnet sein, das um den mittleren Wellenabschnitt gewickelt ist. Hierdurch ist eine Verdrehung des zweiten Abschnitts lediglich durch Abschaltung eines der beiden Schlingbänder möglich. Die Steuerung dieser erfolgt entgegen der Wirkung der Energiespeicher dieser Schlingbänder durch den dritten Wellenabschnitt. Hierzu kann ein zweites Paar gegeneinander geschalteter Schlingbänder jeweils mittels eines Endes fest an dem dritten Wellenabschnitt und mittels des anderen Endes unter Zwischenschaltung eines Energiespeichers wie Blattfeder elastisch mit dem Gehäuse verbunden und um den mittleren Wellenabschnitt gewickelt sein.

Die Steuerung des mittleren Wellenabschnitts durch den dritten Wellenabschnitt erfolgt mittels der zwischen Rampenring und drittem Wellenabschnitt angeordneten Sensiereinrichtung, die einen Nachstellbedarf ermittelt, wenn die Anpressplatte einen vorgegeben Bereich eines Hubs verlässt. Dabei wird ein Nachstellbedarf bei in Richtung Gegendruckplatte wanderndem Betriebspunkt bei geschlossener Reibungskupplung beispielsweise bei Belagsverschleiß der Reibbeläge festgestellt und in einem Energiespeicher gespeichert. Beim Öffnen der Reibungskupplung wird der Betriebspunkt durch eine entsprechende Verdrehung des ersten Wellenabschnitts und damit der den Rampenring entsprechend verdrehenden Spindel korrigiert. Ein in Richtung der Tellerfeder beispielsweise bei quellenden Reibbelägen und/oder Topfung von Kupplungsbauteilen verlagerter Betriebspunkt wird von der Sensiereinrichtung bei sich öffnender beziehungsweise geöffneter Reibungskupplung festgestellt, so dass der Betriebspunkt infolge fehlender Verblockung des Rampenrings ohne Zwischenspeicherung korrigiert werden kann.

Der Aufbau und die Funktionsweise der vorgeschlagenen Reibungskupplung mit Nachstelleinrichtung werden anhand des in den Figuren 1 bis 4 dargestellten Ausführungsbeispiels näher erläutert. Dabei zeigen:
- Figur 1: einen Teilschnitt durch eine Reibungskupplung mit Nachstelleinrichtung,
- Figur 2: ein schematisch dargestelltes Funktionsbeispiel in 3D-Darstellung,
- Figur 3: ein schematisch dargestelltes Funktionsbeispiel in Seitenansicht
- Figuren 4a bis c: erster und zweiter Wellenabschnitt in verschiedenen Funktionszuständen.

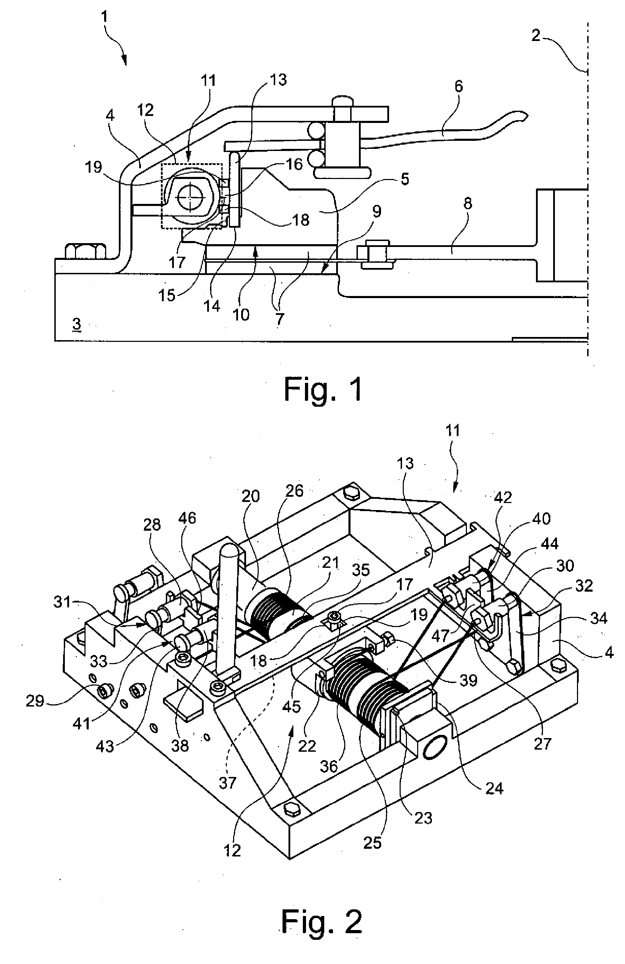

Figur 1 zeigt einen Teilschnitt durch die um die Drehachse 2 angeordnete Reibungskupplung 1 mit der Gegendruckplatte 3, welche fest mit dem Gehäuse 4 verbunden ist. In dem Gehäuse 4 ist die Anpressplatte 5 mittels nicht dargestellter Blattfedern drehfest und axial gegenüber der Gegendruckplatte 3 aufgenommen und wird von.der sich an dem Gehäuse 4 abstützenden Tellerfeder 6 gegen die Gegendruckplatte 3 der Anpressplatte 5 verspannt. Zwischen Reibflächen 9, 10 der Gegendruckplatte 3 und der Anpressplatte 5 sind Reibbeläge 7 der Kupplungsscheibe 8 unter Bildung des Betriebspunkts, der als axiale Position der Reibfläche 10 gegenüber der Drehachse 2 definiert sein kann, verspannt und bilden mit diesen einen Reibeingriff. Wird die Vorspannung der Tellerfeder 6 durch ein nicht dargestelltes Ausrücksystem verringert, löst sich der Reibeingriff durch Verlagerung der Anpressplatte 5 infolge der Wirkung der im geschlossenen Zustand der Reibungskupplung axial vorgespannten Blattfedern.

Die Reibungskupplung 1 weist die bei Änderung des Betriebspunkts selbstnachstellende Nachstelleinrichtung 11 auf, die den an dem Gehäuse 4 aufgenommenen Spindeltrieb 12 und den zwischen der Tellerfeder 6 und der Anpressplatte 5 angeordneten Rampenring 13 enthält. Der Rampenring 13 weist über den Umfang ansteigende, der Anpressplatte 5 zugewandte Rampen 14 auf, die auf Gegenrampen 15 der Anpressplatte 5 aufliegen, so dass bei einer Verdrehung des Rampenrings 13 je nach Drehrichtung der Abstand zwischen Reibfläche 10 zu der Tellerfeder 6 zu- oder abnimmt, so dass der Betriebspunkt gegenüber der Tellerfeder geändert werden kann und damit bei Verschleiß oder Quellen der Reibbeläge oder anderen Einflussgrößen wie beispielsweise Topfen der Anpressplatte 5 ein sich ändernder Betriebspunkt so geändert werden kann, dass die Tellerfeder ihren vorgegebenen Anstellwinkel gegenüber dem Rampenring 13 und damit die über den Ausrückweg vorgegebene Kraftentfaltung beibehalten kann.

Zur Detektion eines sich ändernden Betriebspunkts ist zwischen dem Rampenring 13 und dem Spindeltrieb 12 die Sensiereinrichtung 16 vorgesehen, die in dem gezeigten Ausführungsbeispiel durch den am Spindeltrieb 12 vorgesehenen Fühler 17 und die beiden spielbehaftet gegenüber diesem am Rampenring 13 vorgesehenen Anschläge 18, 19 gebildet ist. Der Fühler 17 befindet sich bei unverändertem Betriebspunkt während der Betätigungsvorgänge der Reibungskupplung zwischen den hin- und herverlagerten Anschlägen 18, 19. Verändert sich der Betriebspunkt, schlägt einer der Anschläge 18, 19 im geöffneten beziehungsweise geschlossenen Zustand der Reibungskupplung an dem Fühler 17 an und verlagert diesen zur Korrektur des veränderten Betriebspunktes.

Wird beispielsweise der Betriebspunkt durch Belagsverschleiß in Richtung Gegendruckplatte 3 verlagert, schlägt der Fühler 17 im geschlossenen Zustand an den Anschlag 19 an und ein Nachstellbedarf wird erkannt. Quellen die Reibbeläge 7 und/oder topft die Anpressplatte 5, wird der Betriebspunkt in Richtung Tellerfeder 6 verlagert und der Fühler 17 stößt bei geöffneter Reibungskupplung am Anschlag 18 an und ein Nachstellbedarf wird erkannt. Es versteht sich, dass das Ausrücksystem der Reibungskupplung auf einen konstanten Hub ausgelegt ist, entsprechend kalibriert ist und laufend nachjustiert wird.

Figur 2 zeigt anhand des 3D-Funktionsmodells der Nachstelleinrichtung 11 den Aufbau und die Funktion des Spindeltriebs 12 bei erkanntem Nachstellbedarf. Der Spindeltrieb 12 enthält die drei konzentrisch zueinander aufgenommenen Wellenabschnitte 20, 21, 22. Der innere Wellenabschnitt 20 enthält in nicht dargestellter Weise die Spindel mit einer darauf drehfest angeordneten und bei Spindelverdrehung axial verlagerbaren Spindelmutter, die in den Rampenring 13 formschlüssig eingreift und diesen je nach Drehrichtung der Spindel im Uhrzeigersinn oder gegen den Uhrzeigersinn verdreht, den Betriebspunkt also in axial beide Richtungen korrigieren kann. Der innere Wellenabschnitt 20 ist verdrehbar in dem Gehäuse 4 der Reibungskupplung 1 (Figur 1) aufgenommen. In Form einer Hohlwelle ist der mittlere Welienabschnitt 21 begrenzt verdrehbar auf dem Wellenabschnitt 20 aufgenommen.

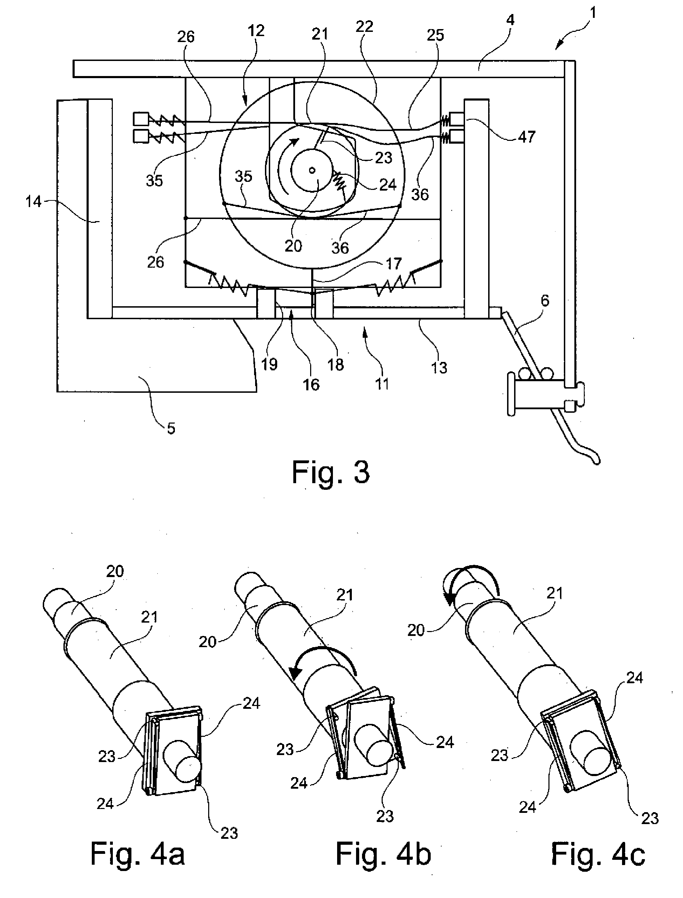

Wie aus Figur 2 und im Detail aus den Figuren 4a bis 4c hervorgeht, sind in dem gezeigten Ausführungsbeispiel die Wellenabschnitte 20, 21 in eine Drehrichtung inelastisch mittels der Anschläge 23 und in die andere Drehrichtung elastisch mittels der Energiespeicher 24 wie Blattfedern miteinander drehgekoppelt. Wird daher in der gezeigten Darstellung der Wellenabschnitt 20 vom Wellenabschnitt 21 gegen den Uhrzeigersinn mitgenommen (Figur 4c) ist die Verdrehung drehstarr ausgebildet und erfolgt ohne Zwischenspeicherung des Drehwegs zur Korrektur des Betriebspunkts, indem die auf dem Wellenabschnitt beispielsweise in axialer Verlängerung ausgebildete Spindel über die Spindelmutter bei geöffneter Reibungskupplung den dann nicht belasteten Rampenring sofort verdreht. Wird der Wellenabschnitt 21 bei geschlossener Reibungskupplung beispielsweise bei einer Abnahme der Reibbelagstärke verdreht, ist der Wellenabschnitt 20 über die Spindel und den unter Axialbelastung stehenden Rampenring 13 (Figur 2) blockiert, so dass die Wellenabschnitte 20, 21 entgegen der Wirkung der Energiespeicher 24 verdreht werden, der Verdrehweg also zwischengespeichert wird, bis beim nächten Öffnen der Reibungskupplung der Rampenring 13 entlastet wird und die Energiespeicher 24 den Wellenabschnitt 20 und nachfolgend die Spindel, die Spindelmutter und den Rampenring 13 antreiben und damit die Korrektur des Betriebspunkts bewirken.

Wie aus Figur 2 weiter hervorgeht, ist der Wellenabschnitt 21 mittels der ein erstes Paar bildenden, in ihrer Wirkung entgegengesetzt angeordneten Schlingbänder 25, 26 verdrehgesichert. Hierbei sind die Schlingbänder 25, 26 an einem Ende 27, 29 fest mit dem Gehäuse 4 verbunden und mit ihrem anderen Ende 28, 30 mittels der Energiespeicher 31, 32 - hier mit dem Gehäuse 4 einseitig verbundenen Blattfedern 33, 34 - elastisch verbunden. Hierbei ziehen die um den Wellenabschnitt 21 angeordneten Schlingbänder 25, 26 jeweils in die entgegengesetzte Drehrichtung zu und blockieren die Drehbewegung des Wellenabschnitts 21 und öffnen in die anderen Drehrichtung, sobald die Vorspannung der Blattfedern 33, 34 gelöst wird.

Diese Drehkraft wird mittels der in ihrer Wirkung entgegengesetzt angeordneten Schlingbänder 35, 36 im Nachstellfall drehrichtungsspezifisch von dem Wellenabschnitt 22 auf den Wellenabschnitt 21 übertragen. Hierzu ist jeweils ein Ende 37, 39 der um den Wellenabschnitt 21 gewickelten Schlingbänder 35, 36 fest mit dem Wellenabschnitt 22 verbunden und das andere Ende 38, 40 mittels der Energiespeicher 41, 42 - hier mit dem Gehäuse 4 einseitig verbundenen Blattfedern 43, 44 - elastisch verbunden. Der Wellenabschnitt 22 weist den Fühler 17 auf, der sich in die Öffnung 45 mit den Anschlägen 18, 19 erstreckt.

Die Lösung der Vorspannungen der Schlingbänder 25, 26, 35, 36 erfolgt gezielt mittels des Rampenrings 13 abhängig von dessen Bewegung quer zu Drehachse der Wellenabschnitte 20, 21, 22. Hierzu sind an dem Rampenring 13 die Anschläge 46, 47 vorgesehen, die jeweils paarweise und abhängig von der Bewegungsrichtung des Rampenrings 13 die Vorspannung der Blattfedern 33, 34, 43, 44 aufheben und damit die Schlingwirkung der Schlingbänder 25, 26, 35, 36 aufheben.

Während des Normalbetriebs der Reibungskupplung 1 (Figur 1) ohne Nachstellung bewegt sich der Fühler 17 zwischen den Anschlägen 18, 19 des Rampenrings, so dass keine Nachstellung erfolgt. Infolge des in beide Drehrichtungen eingespannten Wellenabschnitts 21 bleibt auch der Wellenabschnitt 20 mittels der Anschläge 23 und Energiespeicher 24 gegenüber diesem positioniert (Figur 4a), eine Verdrehung der Spindel und daher eine Nachstellung des Rampenrings 13 erfolgt nicht.

Wandert der Rampenring 13 mit dem Fühler 17 infolge eines Verschleißes der Reibbeläge 7 (Figur 1) und damit einer Verlagerung der Anpressplatte 5 (Figur 1) im geschlossenen Zustand der Reibungskupplung 1 in Richtung Anschlag 19, wird der Fühler 17 vom Anschlag 19 mitgenommen. Hierbei zieht das Schlingband 35 und nimmt den Wellenabschnitt 21 unter Öffnung der Schlingbänder 25, 36 mittels des Anschlags 47 gegen den Uhrzeigersinn mit. Infolge des im geschlossenen Zustand der Reibungskupplung 1 zwischen Tellerfeder 6 und der Anpressplatte 5 (Figur 1) geklemmten Rampenrings 13 und damit auch an der Verdrehung gehinderten Spindel am Wellenabschnitt 20 verdreht sich der Wellenabschnitt 21 gegenüber dieser entgegen der Wirkung der Energiespeicher 24 (Figur 4b). Nach dem Öffnen der Reibungskupplung 1 wird der Rampenring 13 von der Vorspannung der Tellerfeder 6 entlastet und der Wellenabschnitt 20 verdreht sich gegenüber dem Wellenabschnitt 21 unter Abbau der Vorspannung der Energiespeicher 24 entgegen des Uhrzeigersinns (Figur 4c) und die Spindel verdreht den Rampenring 13 in Umfangsrichtung zur Korrektur des geänderten Betriebspunkts.

Im umgekehrten Fall, beispielsweise bei Topfung der Anpressplatte 5 und/oder quellenden Reibbelägen 7, wandert der Fühler 17 in Richtung Anschlag 18 und wird beim Öffnen der Reibungskupplung 1 von dem Anschlag 18 mitgenommen. Hierbei werden mittels des Anschlags 46 die Schlingbänder 26, 35 gelöst und der Wellenabschnitt 21 wird von den Schlingbändern 25, 36 im Uhrzeigersinn mitgenommen. Da bei der sich öffnenden Reibungskupplung 1 der Rampenring 13 entlastet ist, kann eine Zwischenspeicherung der Drehbewegung entfallen und die Verdrehung des Wellenabschnitts 20 mittels des Wellenabschnitts 21 ohne Zuschaltung einer Elastizität direkt mittels der Anschläge 23 erfolgen und dabei der Rampenring 13 mittels der Spindel angetrieben werden.

Figur 3 zeigt eine schematische Darstellung der Reibungskupplung 1 mit der Nachstelleinrichtung 11. Zwischen der Anpressplatte 5 und der am Gehäuse 4 aufgenommenen Tellerfeder 6 ist der Rampenring 13 aufgenommen, der einerseits mittels der Rampen 14 bei dessen Verdrehung einen sich ändernden Betriebspunkt durch Änderung des Abstands zwischen Anpressplatte 5 und Tellerfeder 6 korrigiert und andererseits die Sensiereinrichtung 16 für den Nachstellbedarf bei verstelltem Betriebspunkt bildet. Hierzu weist der Rampenring 13 die Anschläge 18, 19 auf, die sich gegenüber dem Fühler 17 des Spindeltriebs 12 bewegen.

In dem gezeigten Ausführungsbeispiel schlägt der Anschlag 19 am Fühler 17 an, was bedeutet, dass der Betriebspunkt beginnt, sich bei verminderter Reibbelagstärke in Richtung Gegendruckplatte 3 (Figur 1) und entgegengesetzt zur Tellerfeder 6 zu verlagern. Infolge dessen beginnen sich die Schlingbänder 25, 35 durch den Anschlag 47 des Rampenrings 13 zu lösen, während die geschalteten Schlingbänder 26, 36 die von dem Rampenring 13 über den Fühler 17 erzwungene Drehbewegung des Wellenabschnitts 22 auf den Wellenabschnitt 21 übertragen. Infolge des geschlossenen Zustands der Reibungskupplung 1 ist der mit dem Rampenring 13 kinematisch über die Spindel und die Spindelmutter gekoppelte Wellenabschnitt 20 in seiner Drehbewegung blockiert, so dass sich bei zunehmendem Belagsverschleiß eine Relativverdrehung zwischen den Wellenabschnitten 20, 21 über die Energiespeicher 24 aufbaut. Diese wird bei sich öffnender Reibungskupplung 1 bei Entlastung des Rampenrings 13 durch dessen Verdrehung und Korrektur des Betriebspunkts abgebaut, bis die Anschläge 23 die Relativverdrehung der Wellenabschnitte 20, 21 begrenzen.

### Bezugszeichenliste

- 1: Reibungskupplung
- 2: Drehachse
- 3: Gegendruckplatte
- 4: Gehäuse
- 5: Anpressplatte
- 6: Tellerfeder
- 7: Reibbelag
- 8: Kupplungsscheibe
- 9: Reibfläche
- 10: Reibfläche
- 11: Nachstelleinrichtung
- 12: Spindeltrieb
- 13: Rampenring
- 14: Rampe
- 15: Gegenrampe
- 16: Sensiereinrichtung
- 17: Fühler
- 18: Anschlag
- 19: Anschlag
- 20: Wellenabschnitt
- 21: Wellenabschnitt
- 22: Wellenabschnitt
- 23: Anschlag
- 24: Energiespeicher
- 25: Schlingband
- 26: Schlingband
- 27: Ende
- 28: Ende
- 29: Ende
- 30: Ende
- 31: Energiespeicher
- 32: Energiespeicher
- 33: Blattfeder
- 34: Blattfeder
- 35: Schlingband
- 36: Schlingband
- 37: Ende
- 38: Ende
- 39: Ende
- 40: Ende
- 41: Energiespeicher
- 42: Energiespeicher
- 43: Blattfeder
- 44: Blattfeder
- 45: Öffnung
- 46: Anschlag
- 47: Anschlag

## Patentansprüche

1. Reibungskupplung (1) mit einer mit einem Gehäuse (4) drehfest verbundenen Gegendruckplatte (3) und einer mittels Blattfedern gegenüber dieser drehfest und axial verlagerbar aufgenommenen und von einer Tellerfeder (6) unter Einspannung von Reibbelägen (7) auf einen voreingestellten Betriebspunkt vorgespannten Anpressplatte (5) sowie einer Nachstelleinrichtung (11) zur Nachführung eines sich ändernden Betriebspunktes mittels eines mittels in Umfangsrichtung und über den Umfang verteilten Rampen (14) auf komplementären Gegenrampen (15) der Anpressplatte (5) zwischen Anpressplatte (5) und Tellerfeder (6) aufgenommenen und abhängig von einer Änderung des Betriebspunkts von einem Spindeltrieb (12) verdrehten Rampenrings (13) sowie einer eine Änderung, des Betriebspunktes erfassende, den Spindeltrieb (12) steuernde Sensiereinrichtung (16), **dadurch gekennzeichnet, dass** der Spindeltrieb (12) fest an dem Gehäuse (4) aufgenommen ist und drei konzentrisch zueinander angeordnete, begrenzt gegenüber dem Gehäuse (4) und gegeneinander verdrehbare Wellenabschnitte (20, 21, 22) aufweist, wobei der innere Wellenabschnitt (20) ein den Rampenring (13) antreibendes Spindelgetriebe enthält und gegenüber dem mittleren Wellenabschnitt (21) in eine Drehrichtung fest und in die andere Drehrichtung entgegen der Wirkung erster Energiespeicher (24) begrenzt verdrehbar ist und der mittlere und der äußere, die Sensiereinrichtung (16) zum Rampenring (13) enthaltende Wellenabschnitt (21, 22) jeweils mittels zweier gegeneinander geschalteter schaltbarer Schlingbänder (25, 26, 35, 36) gegenüber dem Gehäuse (4) verdrehgesichert angeordnet sind.

2. Reibungskupplung (1) nach Anspruch 1, **dadurch gekennzeichnet, dass** ein erstes Paar gegeneinander geschalteter Schlingbänder (25, 26) jeweils mittels eines Endes (27, 29) fest und des anderen Endes (28, 30) unter Zwischenschaltung eines Energiespeichers (31, 32) elastisch mit dem Gehäuse (4) verbunden ist und um den mittleren Wellenabschnitt (21) gewickelt ist.

3. Reibungskupplung (1) nach Anspruch 2, **dadurch gekennzeichnet, dass** ein zweites Paar gegeneinander geschalteter Schlingbänder (35, 36) jeweils mittels eines Endes (37, 39) fest an dem dritten Wellenabschnitt (22) und mittels des anderen Endes (38, 40) unter Zwischenschaltung eines Energiespeichers (41, 42) elastisch mit dem Gehäuse (4) verbunden ist und um den mittleren Wellenabschnitt (21) gewickelt ist.

4. Reibungskupplung (1) nach Anspruch 2 oder 3, **dadurch gekennzeichnet, dass** die Energiespeicher (31, 32, 41, 42) Blattfedern (33, 34, 43, 44) sind.

5. Reibungskupplung (1) nach einem der Ansprüche 1 bis 4, **dadurch gekennzeichnet, dass** eine in einem geschlossenen Zustand der Reibungskupplung (1) erkannte Verlagerung des Betriebspunktes in Richtung Gegendruckplatte (3) in den ersten Energiespeichern (24) gespeichert und beim Öffnen der Reibungskupplung der Betriebspunkt korrigiert wird.

6. Reibungskupplung (1) nach einem der Ansprüche 1 bis 5, **dadurch gekennzeichnet, dass** eine Verlagerung des Betriebspunkts in Richtung Tellerfeder (6) bei sich öffnender Reibungskupplung (1) ohne Zwischenspeicherung korrigiert wird.

7. Reibungskupplung (1) nach einem der Ansprüche 1 bis 6, **dadurch gekennzeichnet, dass** zwischen dem Rampenring (13) und dem dritten Wellenabschnitt (22) in beide Richtungen des sich verlagernden Betriebspunktes ein spielbehafteter Anschlag (18, 19) vorgesehen ist.

8. Reibungskupplung (1) nach Anspruch 7, **dadurch gekennzeichnet, dass** das Spiel zwischen Anschlägen (18, 19) des Rampenrings (13) und des dritten Wellenabschnitts (22) einem Hub der Reibungskupplung (1) zwischen geschlossenem und geöffnetem Zustand entspricht.

## Claims

1. Friction clutch (1) with a back-pressure plate (3) connected fixedly in terms of rotation to a housing (4) and with a press-down plate (5) accommodated fixedly in terms of rotation and axially displaceably with respect to the said back-pressure plate by means of leaf springs and preestressed to a preset operating point by a cup spring (6), frictional linings (7) thereby being clamped, and also with an adjusting device (11) for tracking a changing operating point by means of a ramp ring (13) which is accommodated by means of ramps (14) distributed in the circumferential direction and over the circumference on complementary counter-ramps (15) of the press-down plate (5) between the press-down plate (5) and cup spring (6) and which is rotated by a spindle drive (12) as a function of a change in the operating point, as well as with a sensing device (16) detecting a change in the operating point and controlling the spindle drive (12), **characterized in that** the spindle drive (12) is accommodated firmly on the housing (4) and has three shaft portions (20, 21, 22) arranged concentrically to one another and rotatable to a limited extent with respect to the housing (4) and with respect to one another, the inner shaft portion (20) containing a spindle mechanism driving the ramp ring (13) and being fixed in one direction of rotation with respect to the middle shaft portion (21) and being rotatable to a limited extent in the other direction of rotation counter to the action of first energy accumulators (24), and the middle and the outer shaft portion (21, 22) which contain the sensing device (16) for the ramp ring (13) being in each case arranged, secured against rotation with respect to the housing (4), by means of two switchable wrap-around bands (25, 26, 35, 36) switched relative to one another.

2. Friction clutch (1) according to Claim 1, **characterized in that** a first pair of wrap-around bands (25, 26) switched relative to one another is connected in each case by means of one end (27, 29) firmly to the housing (4) and by means of the other end (28, 30), with an energy accumulator (31, 32) interposed, elastically to the housing (4) and is wound around the middle shaft portion (21).

3. Friction clutch (1) according to Claim 2, **characterized in that** a second pair of wrap-around bands (35, 36) switched relative to one another is connected in each case by means of one end (37, 39) firmly to the third shaft portion (22) and by means of the other end (38, 40), with an energy accumulator (41, 42) interposed, elastically to the housing (4) and wound around the middle shaft portion (21).

4. Friction clutch (1) according to Claim 2 or 3, **characterized in that** the energy accumulators (31, 32, 41, 42) are leaf springs (33, 34, 43, 44).

5. Friction clutch (1) according to one of Claims 1 to 4, **characterized in that** a displacement, detected in a closed state of the friction clutch (1), of the operating point in the direction of the back-pressure plate (3) is stored in the first energy accumulator (24) and, when the friction clutch is opened, the operating point is corrected.

6. Friction clutch (1) according to one of Claims 1 to 5, **characterized in that** a displacement of the operating point in the direction of the cup spring (6) is corrected, without intermediate storage, when the friction clutch (1) opens.

7. Friction clutch (1) according to one of Claims 1 to 6, **characterized in that** a play-endowed stop (18, 19) is provided between the ramp ring (13) and the third shaft portion (22) in both directions of the operating point being displaced.

8. Friction clutch (1) according to Claim 7, **characterized in that** the play between stops (18, 19) of the ramp ring (13) and of the third shaft portion (22) corresponds to a stroke of the friction clutch (1) between the closed and the open state.

## Revendications

1. Embrayage à friction (1) comprenant une plaque de contrepression (3) connectée de manière solidaire en rotation à un boîtier (4) et une plaque de pressage (5) reçue de manière solidaire en rotation par rapport à celle-ci au moyen de ressorts à lames et pouvant être déplacée axialement et précontrainte par un ressort à coupelle (6) par serrage de garnitures de friction (7) à un point de fonctionnement préalablement ajusté, ainsi qu'un dispositif de rattrapage (11) pour le réglage d'un point de fonctionnement variable au moyen d'une bague de rampe (13) reçue, au moyen de rampes (14) réparties dans la direction périphérique sur la périphérie, sur des rampes conjuguées complémentaires (15) de la plaque de pressage (5) entre la plaque de pressage (5) et le ressort à coupelle (6) et tournée par un entraînement à broche (12) en fonction d'une variation du point de fonctionnement ainsi qu'un dispositif de détection (16) commandant l'entraînement à broche (12) et détectant une variation du point de fonctionnement, **caractérisé en ce que** l'entraînement à broche (12) est reçu fixement sur le boîtier (4) et présente trois portions d'arbre (20, 21, 22) disposées concentriquement les unes par rapport aux autres et pouvant tourner de manière limitée par rapport au boîtier (4) et les unes par rapport aux autres, la portion d'arbre intérieure (20) contenant une transmission à broche entraînant la bague de rampe (13), et étant fixe par rapport à la portion d'arbre centrale (21) dans une direction de rotation et pouvant tourner de manière limitée dans l'autre direction de rotation à l'encontre de l'action de premiers accumulateurs d'énergie (24) et la portion d'arbre centrale (21) et la portion d'arbre extérieure (22) contenant le dispositif de détection (16) vers la bague de rampe (13) étant à chaque fois disposées de manière fixée en rotation par rapport au boîtier (4) au moyen de deux bandes d'enveloppement (25, 26, 35, 36) commutables commutées l'une par rapport à l'autre.

2. Embrayage à friction (1) selon la revendication 1, **caractérisé en ce qu'**une première paire de bandes d'enveloppement commutées l'une par rapport à l'autre (25, 26) est connectée au boîtier (4) à chaque fois fixement au moyen d'une extrémité (27, 29) et élastiquement au moyen de l'autre extrémité (28, 30) par interposition d'un accumulateur d'énergie (31, 32) et est enroulée autour de la portion d'arbre centrale (21).

3. Embrayage à friction (1) selon la revendication 2, **caractérisé en ce qu'**une deuxième paire de bandes d'enveloppement commutées l'une par rapport à l'autre (35, 36) est connectée à chaque fois fixement au moyen d'une extrémité (37, 39) à la troisième portion d'arbre (22) et élastiquement au boîtier (4) au moyen de l'autre extrémité (38, 40) par interposition d'un accumulateur d'énergie (41, 42), et est enroulée autour de la portion d'arbre centrale (21).

4. Embrayage à friction (1) selon la revendication 2 ou 3, **caractérisé en ce que** les accumulateurs d'énergie (31, 32, 41, 42) sont des ressorts à lames (33, 34, 43, 44).

5. Embrayage à friction (1) selon l'une quelconque des revendications 1 à 4, **caractérisé en ce qu'**un déplacement détecté dans un état fermé de l'embrayage à friction (1) du point de fonctionnement dans la direction de la plaque de contrepression (3) est stocké dans les premiers accumulateurs d'énergie (24) et le point de fonctionnement est corrigé lors de l'ouverture de l'embrayage à friction.

6. Embrayage à friction (1) selon l'une quelconque des revendications 1 à 5, **caractérisé en ce qu'**un déplacement du point de fonctionnement dans la direction du ressort à coupelle (6) est corrigé sans interposition lors de l'ouverture de l'embrayage à friction (1).

7. Embrayage à friction (1) selon l'une quelconque des revendications 1 à 6, **caractérisé en ce qu'**entre la bague de rampe (13) et la troisième portion d'arbre (22) est prévue une butée affectée d'un jeu (18, 19) dans les deux directions du point de fonctionnement se déplaçant.

8. Embrayage à friction (1) selon la revendication 7, **caractérisé en ce que** le jeu entre les butées (18, 19) de la bague de rampe (13) et de la troisième portion d'arbre (22) correspond à une course de l'embrayage à friction (1) entre l'état fermé et l'état ouvert.
